**Europäisches Patentamt**

**European Patent Office**

**Office européen des brevets**

(19)

(11) Veröffentlichungsnummer : **0 325 905 B1**

# (12) EUROPÄISCHE PATENTSCHRIFT

(45) Veröffentlichungstag der Patentschrift :
**30.09.92 Patentblatt 92/40**

(51) Int. Cl.$^5$ : **B60C 11/04**

(21) Anmeldenummer : **88890325.9**

(22) Anmeldetag : **21.12.88**

(54) Laufflächenprofil für einen Fahrzeugluftreifen.

(30) Priorität : **27.01.88 AT 160/88**

(43) Veröffentlichungstag der Anmeldung :
**02.08.89 Patentblatt 89/31**

(45) Bekanntmachung des Hinweises auf die
Patenterteilung :
**30.09.92 Patentblatt 92/40**

(84) Benannte Vertragsstaaten :
**AT BE CH DE FR GB IT LI LU NL**

(56) Entgegenhaltungen :
**DE-U- 8 620 979**
**DE-U- 8 628 836**
**GB-A- 1 297 608**

(56) Entgegenhaltungen :
**PATENT ABSTRACTS OF JAPAN, Band 10, Nr.**
**315 (M-529)[2371], 25. Oktober 1986; & JP-A-61**
**125 902 (YOKOHAMA RUBBER CO., LTD)13-**
**06-1986**

(73) Patentinhaber : **Semperit Reifen**
**Aktiengesellschaft**
**Wienersdorferstrasse 20-24**
**A-2514 Traiskirchen (AT)**

(72) Erfinder : **Arendt, Gernot, Dipl.-Ing.**
**Schlossgasse 4/9**
**A-2512 Tribuswinkel (AT)**

(74) Vertreter : **Vinazzer, Edith**
**Semperit Reifen Aktiengesellschaft**
**Patentabteilung Wienersdorferstrasse 20-24**
**A-2514 Traiskirchen (AT)**

## Beschreibung

Die Erfindung betrifft ein Laufflächenprofil für einen Fahrzeugluftreifen mit mindestens drei breiten Umfangsrillen, von denen mindestens eine mittlere Umfangsrille in einem Zentralbereich liegt, und die die Lauffläche in in Umfangsrichtung verlaufende Laufflächenbänder unterteilen, sowie mit auf jeder Laufflächenhälfte ausgebildeten in Umfangsrichtung voneinander beabstandeten Querrillen, die zumindest teilweise die Laufflächenbänder unterteilen und, über die Laufflächenbreite betrachtet, entlang von, insbesondere V-förmigen, Kurven verlaufen, wobei die axial inneren Endbereiche der Querrillen Sackrillen bilden, deren geschlossene Endbereiche von einer schmalen Umfangsnut gekreuzt werden, und wobei die Sackrillen in den seitlich dieser mittleren Umfangsrille anschließenden nicht unterbrochenen Laufflächenbändern ausgebildet sind.

Reifen mit derartigen Laufflächen werden im zunehmenden Ausmaß insbesondere für höhere Geschwindigkeiten konzipiert. Solche Hochgeschwindigkeitsreifen weisen ein geringes Querschnittverhältnis und eine relativ breite Lauffläche auf. Bei der Laufflächenprofilgestaltung für diese Reifen steht u. a. im Vordergrund, ein gutes Naßgriffverhalten, vor allem auch bei höheren Geschwindigkeiten zu erzielen, was insbesondere im Mittelbereich der Aufstandsfläche des Reifens von Bedeutung ist. Sowohl auf nasser als auch auf trockener Fahrbahn soll weiters ein gutes Ansprechverhalten der Reifen auf Lenkkräfte gewährleistet sein. Neben der wirksamen Abfuhr von Wasser aus der Bodenaufstandsfläche ist es weiters ein vordringliches Anliegen, die Geräuschentwicklung bei hohen Geschwindigkeiten möglichst gering zu halten.

Verschiedene Varianten eines Fahrzeugluftreifens der oben genannten Art sind beispielsweise in der EP-A-0175829 dargestellt und beschrieben. Allen in dieser Druckschrift dargestellten Ausführungsvarinaten ist gemeinsam, daß entlang der Mittelumfangslinie des Laufstreifens ein durchgehendes Laufflächenband vorgesehen ist, welches von den seitlich benachbarten Laufflächenbändern durch relativ schmale, gerade Umfangsrillen getrennt ist. Die Ausgestaltung der Laufflächenstruktur im Mittelbereich läßt insbesondere bei hohen Geschwindigkeiten kein optimales Naßgriffverhalten erwarten. Ein Laufflächenprofil gemäß dem Oberbegriff des Anspruches 1 ist z. B. durch die DE-U-8620979 bekannt.

Die Erfindung hat sich nun die Aufgabe gestellt, ein Laufflächenprofil für einen Fahrzeugluftreifen, der insbesondere für höhere Geschwindigkeiten vorgesehen ist, derart zu gestalten, daß eine Optimierung der oben angesprochenen Eigenschaften, also gutes Naßgriffverhalten, geringe Geräuschentwicklung und hohes Reaktionsvermögen auf Lenkkräfte, auch in einem höheren Geschwindigkeitsbereich erzielt wird.

Gelöst wird die gestellte Aufgabe bei einem gattungsgemäßen Profil erfindungsgemäß dadurch, daß der Zentralbereich rund ein Drittel der Gesamtfläche der Lauffläche umfaßt, daß die breiten Umfangsrillen gerade verlaufen, daß weiters im Zentralbereich der Fahrflächenanteil um mindestens 10 % größer ist als in den beiden Seitenbereichen, und daß die schmalen Umfangsnuten 0,5 bis 2 mm breit sind.

Durch die erfindungsgemäßen Maßnahmen wird ein Laufflächenprofil geschaffen, das den gestellten Anforderungen auch in höheren Geschwindigkeitsbereichen gerecht wird. Der gegenüber den Seitenbereichen im Zentralbereich vorgesehene hohe Fahrflächenanteil bewirkt eine hohe Profilsteifigkeit in diesem Bereich. Es hat sich gezeigt, daß mit erfindungsgemäßen Laufflächenprofilen ausgestattete Reifen in allen Geschwindigkeitsbereichen ein sehr gutes Ansprechverhalten um die Nullage aufweisen. Die zusätzlich noch im Zentralbereich vorgeshenen schmalen Umfangsnuten wirken sich besonders günstig auf eine Geräuschminimierung des Reifens aus.

Im Zentralbereich ist der Fahrflächenanteil bevorzugt mindestens 70 %, weiters ist dort bevorzugt eine einzige breite mittlere Umfangsrille entlang der Mittellinie vorgesehen.

Bei einer weiteren Ausgestaltung der Erfindung ist zur Verminderung der Geräuschbildung auch in den schulterseitig verlaufenden Laufflächenbändern je eine schmale, 0,5 bis 2 mm breite weitere Umfangsnut vorgesehen.

Weitere Merkmale, Vorteile und Einzelheiten der Erfindung werden anhand der Zeichnung, die zwei Ausführungsbeispiele des erfindungsgemäßen Laufflächenprofiles darstellen, näher beschrieben. Hiebei ist in den beiden Zeichnungsfiguren je eine Draufsicht auf einen Teil des Profiles eines Fahrzeugluftreifens dargestellt.

Das in den Zeichnungsfiguren dargestellte Laufflächenprofil ist insbesondere für einen PKW-Radialreifen für höhere Geschwindigkeiten vorgesehen. Es wird darauf hingewiesen, daß unter dem im folgenden verwendeten Begriff Laufflächenbreite B die größte axiale Breite der Lauffläche gemessen in der Bodenaufstandsfläche zu verstehen ist.

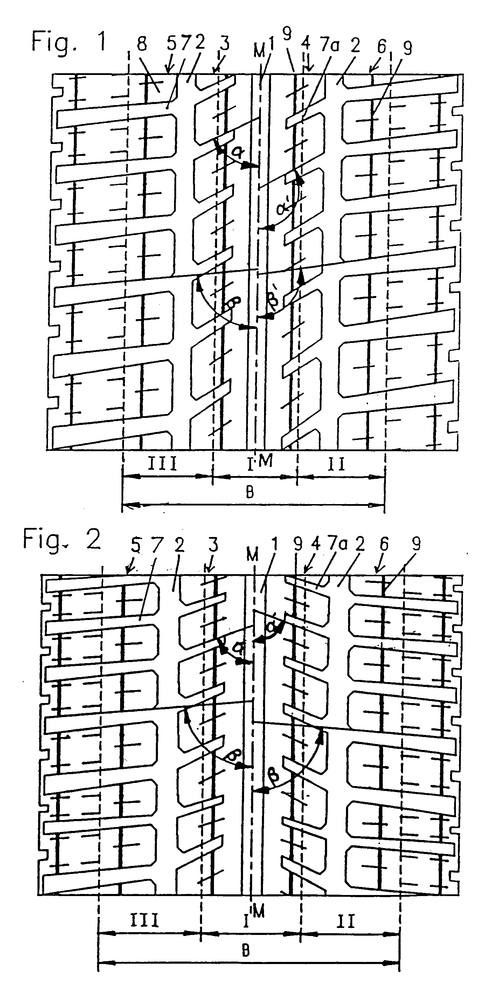

Wie Fig. 1 zeigt, weist das Laufflächenprofil entlang der Mittellinie M-M eine breite, gerade Umfangsrille 1 und in den beiden Laufflächenhälften, symmetrisch zur Mittellinie M-M angeordnet, zwei weitere, breite Umfangsrillen 2 auf. Die drei Umfangsrillen 1, 2 teilen die Lauffläche in in Umfangsrichtung verlaufende Laufflächenbänder 3, 4, 5, 6. In den beiden Laufflächenhälften ist jeweils eine Vielzahl von in Umfangsrichtung voneinander beabstandeten Querrillen 7 vorgesehen, die die schulterseitig gelegenen Laufflächenbänder 5, 6 in einzelne Blöcke 8 unterteilen, in den mittleren Laufflächenbändern 3, 4 hingegen Sackrillen 7a bilden, die somit nicht in die entlang der Mittellinie M-M verlaufende Umfangsrille 1 einmünden. Im Laufflächenmittelbereich bleibt ein Bereich von mindestens 15 % der Laufflächenbreite B frei von Querrillen.

Die Querrillen 7 haben, über die gesamte Laufflächenbreite B betrachtet, im wesentlichen einen geschwungenen, schwach S-förmigen Verlauf. Die die Sackrillen 7a bildenden Abschnitte der Querrillen 7 schließen mit der Mittellinie M-M einen Winkel α im Bereich zwischen 50 und 70° auf der einen Laufflächenhälfte ein, auf der anderen Laufflächenhälfte einen Winkel α′ im Bereich zwischen 110 und 130° ein. Im vorliegenden Ausführungsbeispiel beträgt dieser Winkel ca. 60° bzw. 120°. In den schulterseitigen Laufflächenbändern 5, 6 verlaufen die Querrillen 7 unter einem Winkel β von ca. 75 bis 90° bzw. β′ von 90 bis 105° zur Mittellinie M-M. Bevorzugte Werte liegen, wie im vorliegenden Ausführungsbeispiel dargestellt, bei ca. 83° bzw. 97°. Sowohl die die Sackrillen 7a bildenden Abschnitte der Querrillen 7 sowie deren laufflächenaußenseitig verlaufenden Abschnitte sind bevorzugt so ausgebildet, daß sich ihre Breite zu den beiden Laufflächenseiten zu kontinuierlich vergrößert, wobei das Ausmaß der Verbreiterung relativ gering ist. Die Breite der in der Laufflächenmitte angeordneten Laufflächenbänder 3, 4 liegt im Bereich zwischen 20 und 30 % der Laufflächenbreite B, bevorzugt beträgt die Breite dieser Laufflächenbänder 3, 4 rund 25 %.

Parallel zur Mittellinie M-M verlaufend, ist in jedem Laufflächenband 3, 4, 5, 6 je eine schmale 0,5 bis 2 mm, vorzugsweise ca. 1 mm breite, gerade Umfangsnut 9 vorgesehen. Die Anordnung ist hiebei symmetrisch zur Mittellinie M-M getroffen. Die Tiefe der schmalen Umfangsnuten 9 beträgt mindestens 20 % der sonstigen Profiltiefe. Die in den Laufflächenbändern 3, 4 angeordneten Umfangsnuten 9 verlaufen in einem Abstand von den geschlossenen Endbereichen der Sackrillen 7a und kreuzen diese. Diese Anordnung wirkt sich besonders günstig auf die Geräuschentwicklung dieses Profiles bei hohen Geschwindigkeiten aus.

Wird die Lauffläche über ihre Breite B in drei ca. gleich große Umfangsbereiche geteilt, wobei somit der zentralbereich I symmetrisch zur Mittellinie M-M liegt und die Seitenbereiche II, III jeweils seitlich anschließen, so ist die Fahrfläche im Zentralbereich um mindestens 10 % größer als die Fahrfläche in den Seitenbereichen II, III. Unter Fahrfläche wird hiebei jeweils jener Anteil an der Gesamtfläche der einzelnen Bereiche I, II, III verstanden, der bei Betrieb des Reifens mit dem Untergrund in Berührung kommt. Im vorliegenden Ausführungsbeispiel beträgt die Fahrfläche in den Seitenbereichen II, III jeweils rund 60 %, im Zentralbereich I rund 72 %. Der hohe Fahrflächenanteil im Zentralbereich I bewirkt hier eine erhöhte Steifigkeit und wirkt sich zusammen mit der entlang der Mittellinie M-M verlaufenden Umfangsrille 1 äußerst günstig auf das Ansprechverhalten von mit derartigen Laufflächen versehenen Reifen beim Betrieb mit hohen Geschwindigkeiten aus.

In Fig. 2 ist ein Ausführungsbeispiel eines Profiles für einen laufrichtungsgebundenen Fahrzeugluftreifen dargestellt, wobei der einzige Unterschied zwischen diesem Laufflächenprofil und jenem nach Fig. 1 darin besteht, daß in Fig. 2 die beiden Laufflächenhälften zueinander bezüglich der Mittellinie M-M spiegelbildlich ausgebildet sind. Demnach ist auch der Winkel α, den die Sackrillen 7a sowie der Winkel β, den die im Bereich der Laufflächenbänder 5, 6 verlaufenden Abschnitte der Querrillen 7 mit der Mittellinie M-M einschließen in beiden Laufflächenhälften gleich groß. Die Anordnung der Umfangsrillen 1, 2, der schmalen Umfangsnut 9 sowie die Dreiteilung in einzelne Umfangsbereiche I, II und III ist entsprechend dem ersten Ausführungsbeispiel getroffen, so daß es hier keiner gesonderten Wiederholung bedarf.

Bei einer weiteren, gesondert nicht dargestellten Ausführungsform der Erfindung ist es möglich, anstelle der entlang der Mittellinie verlaufenden mittleren Umfangsrille zwei beidseitig der Mittellinie verlaufende Rillen vorzusehen, die dann durch ein relativ schmales, durchgehendes und entlang der Mittellinie verlaufendes Band voneinander getrennt sind.

## Patentansprüche

1.  Laufflächenprofil für einen Fahrzeugluftreifen mit mindestens drei breiten Umfangsrillen (1,2), von denen mindestens eine mittler Umfangsrille (1) in einem Zentralbereich (I) liegt, und die die Lauffläche in in Umfangsrichtung verlaufende Laufflächenbänder (3, 4, 5, 6) unterteilen, sowie mit auf jeder Laufflächenhälfte ausgebildeten in Umfangsrichtung voneinander beabstandeten Querrillen (7), die zumindest teilweise die Laufflächenbänder unterteilen und, über die Laufflächenbreite (B) betrachtet, entlang von, insbesondere V-förmigen, Kurven verlaufen, wobei die axial inneren Endbereiche der Querrillen (7) Sackrillen (7a) bilden, deren geschlossene Endbereiche von einer schmalen Umfangsnut (9) gekreuzt werden, und wobei die Sackrillen (7a) in den seitlich dieser mittleren Umfangsrille (1) anschließenden nicht unterbrochenen Laufflächenbändern (3, 4) ausgebildet sind, dadurch gekennzeichnet, daß der Zentralbereich (I) rund ein Drittel der Gesamtfläche der Lauffläche umfaßt, daß die breiten Umfangsrillen (1, 2) gerade verlaufen, daß weiters im Zentralbereich (I) der Fahrflächenanteil um mindestens 10 % größer ist als in den beiden Seitenbereichen (II, III), und daß die schmalen Umfangsnuten (9) 0,5 bis 2 mm breit sind.

**2.** Laufflächenprofil nach Anspruch 1, dadurch gekennzeichnet, daß der Fahrflächenanteil im Zentralbereich (I) mindestens 70 % beträgt.

**3.** Laufflächenprofil nach Anspruch 1, dadurch gekennzeichnet, daß im Zentralbereich (I) eine einzige breite mittlere Umfangsrille (1) entlang der Mittellinie (M-M) vorgesehen ist.

**4.** Laufflächenprofil nach Anspruch 1, dadurch gekennzeichnet, daß in den schulterseitig verlaufenden Laufflächenbändern (5, 6) je eine schmale, 0,5 bis 2 mm breite äußere Umfangsnut (9) vorgesehen ist.

**Claims**

**1.** Tread surface profile for a pneumatic vehicle tyre, having at least three wide circumferential grooves (1, 2), at least one central circumferential groove (1) of which is situated in a central region (I), said grooves dividing the tread surface into tread surface strips (3, 4, 5, 6), which extend in the circumferential direction, and such profile having transverse grooves (7), which are provided on each tread surface half and are spaced from one another in the circumferential direction, said transverse grooves dividing the tread surface strips at least partially and extending along curves, more especially V-shaped curves, when viewed over the tread surface width (B), wherein the axially inner end regions of the transverse grooves (7) form blind grooves (7a), the closed end regions of which are crossed by a narrow circumferential groove (9), and wherein the blind grooves (7a) are provided in the continuous tread surface strips (3, 4), which extend laterally adjacent this central circumferential groove (1), characterised in that the central region (I) covers approximately one-third of the total area of the tread surface, in that the wide circumferential grooves (1, 2) extend rectilinearly, in that additionally the tread surface portion in the central region (I) is at least 10 % greater than in the two lateral regions (II, III), and in that the narrow circumferential grooves (9) are 0.5 to 2 mm wide.

**2.** Tread surface profile according to claim 1, characterised in that the tread surface portion in the central region (I) is at least 70 %.

**3.** Tread surface profile according to claim 1, characterised in that one single wide central circumferential groove (1) is provided in the central region (I) along the centre line (M-M).

**4.** Tread surface profile according to claim 1, characterised in that a narrow outer circumferential groove (9), which is 0.5 to 2 mm wide, is provided in each of the tread surface strips (5, 6) extending at the shoulder end.

**Revendications**

**1.** Dessin ou sculpture de bande ou chape de roulement pour bandages pneumatiques de véhicules comportant au moins trois rainures ou gorges circonférentielles larges (1, 2) dont au moins une rainure ou gorge circonférentielle médiane (1) se situe dans la zone centrale (I), et qui subdivise la surface de roulement en plages de surface de roulement (3, 4, 5, 6) s'étendant dans la direction circonférentielle, ainsi qu'avec des rainures ou gorges transversales (7) formées sur chaque moitié de surface de roulement et espacées entre elles dans la direction circonférentielle, rainures ou gorges transversales qui au moins partiellement subdivisent les plages de surface de roulement et, s'étendent vu sur la largeur de surface de roulement (B) le long de courbes, notamment de courbes en forme de V, les zones d'extrémité intérieures axialement des rainures ou gorges transversales (7) formant des rainures ou gorges en forme de poche (7a) dont les zones d'extrémité fermées sont croisées par une gorge circonférentielle étroite (9), et les rainures ou gorges en forme de poche (7a) étant formées dans les plages de surface de roulement (3, 4) non interrompues contiguës latéralement à cette rainure ou gorge circonférentielle médiane (1), caractérisé en ce que la zone centrale (I) comprend environ un tiers de la totalité de la surface de roulement, en ce que les rainures ou gorges circonférentielles larges (1, 2) s'étendent de façon rectiligne, en ce que de plus dans la zone centrale (I) la portion de surface de roulement est supérieure d'au moins 10% à celle dans les deux zones latérales (II, III) et en ce que les rainures ou gorges circonférentielles étroites (9) ont une largeur de 0,5 jusqu'à 2 mm.

**2.** Dessin ou sculpture de bande de roulement pour bandage pneumatique selon la revendication 1, caractérisé en ce que la portion de surface de roulement dans la zone centrale (I) est d'au moins 70 %.

3. Dessin ou sculpture de bande de roulement pour bandage pneumatique selon la revendication 1, caractérisé en ce que dans la zone centrale (I) est prévue une seule rainure ou gorge circonférentielle médiane large (1) le long de la ligne médiane (M-M).

4. Dessin ou sculpture de bande de roulement pour bandage pneumatique selon la revendication 1, caractérisé en ce que dans les plages de surface de roulement s'étendant latéralement sur l'épaulement (5, 6) est respectivement prévue une gorge circonférentielle extérieure (9) étroite d'une largeur de 0,5 jusqu'à 2 mm.

Fig. 1

Fig. 2